# EUROPEAN PATENT APPLICATION

(11) **EP 2 241 191 A1**
(43) Date of publication of application: **20.10.2010**
(21) Application number: 10160046.8
(22) Date of filing: 13.11.2008
(51) Int. Cl.: A23G 3/20, A23G 9/24, A23G 9/26, A23G 9/48

(54) **Device and method for applying a continuous or discontinuous thin layer of chocolate to a frozen confectionery substrate by spraying, and corresponding method**

(30) Priority: 16.11.2007 US 988487 P
(62) Divisional of application: 08850260.4
(71) Applicant: Nestec S.A., 1800 Vevey (CH)
(72) Inventor: Leas, Alain, DUBLIN, OH 43017 (US); Maul, Gary Pierre, COLUMBUS, OH 43235 (US); Nos, Samnang, COLUMBUS, OH 43228 (US)
(74) Representative: Rossand, Isabelle

(57) **Abstract**

The present invention relates to a method for coating a frozen confectionery substrate with a continuous or discontinuous layer of reduced fat chocolate comprising the steps of:
spraying a liquid chocolate composition into a target area, wherein the liquid chocolate composition includes less than 40% fat; and
moving a frozen confectionery substrate having an outside surface into and out of the target area such that a portion of the outside surface becomes coated with the liquid chocolate composition.

The present invention furthermore relates to a device for carrying out such a method and to the product obtained thereby.

## Description

### FIELD OF THE INVENTION

The invention relates to a frozen confection with reduced-fat, thin and uniform chocolate coating as well as to an apparatus and method for applying said chocolate coating.

### BACKGROUND OF THE INVENTION

Coated confectionary products are known. A popular type of such product is a coated frozen confection, such as frozen confectionary bars with a coating of another type of confection such as chocolate. A frozen confectionary bar typically has an ice confection, such as ice cream, frozen yogurt, sherbet, gelato, and the like, formed into an elongated, semi-rectangular shape and a stick projecting from an end of the ice confection. Such coated products are popular because they are portable and easy to handle, and can be provided in pre-packaged single servings. Further, the coating provides an added flavor and texture dimension to the product and can also help retain any melted portion of the frozen product.

Reduced- or low-fat variations of confections, including frozen confections, are also gaining popularity. While low- or reduced-fat frozen confections, such as reduced-fat ice cream, ice milk, frozen yogurt and the like, are known, it has been difficult to provide low- or reduced-fat coatings, particularly chocolate or chocolate-flavored coatings. Simply reducing the fat content of the coating has proven unsuccessful, especially with chocolate coatings, because a reduction in the fat content of chocolate results in a higher viscosity. A reduced-fat, higher viscosity composition adheres in a greater amount to the substrate when applied with known methods of coating, resulting in a relatively thicker coating. Further, a coating having reduced fat content, e.g. 30 to 40% fat, could heretofore be applied only by dipping because the spraying of a reduced-fat composition would tend to clog the spray nozzles. Dipping, however, generally results in a thicker coating than spraying. Because an increase in the overall thickness and amount of the coating increases the overall fat content, a reduction in fat content is negated and possibly even outweighed by the increase in the thickness and amount of coating.

Accordingly, there is a need for a low-or reduced-fat coating that can be provided in a relatively thin coating.

### SUMMARY OF THE INVENTION

In one embodiment, the frozen confectionary product includes a substrate formed substantially of a frozen confection and having an outside surface and a discontinuous or continuous chocolate coating applied on the outside surface of the substrate. The chocolate coating contains less than about 40% fat by total weight, and the chocolate coating has a thickness of from about 0.3 mm to less than about 1.7 mm and preferably from about 0.5 mm to 1.25 mm. Preferably the chocolate coating contains less than about 35% fat by weight of the coating. In one embodiment, the weight of the chocolate coating is less than or equal to about 30% of the total weight of the frozen confectionary bar.

In a further embodiment, the frozen confectionary product is formed by spraying the chocolate coating onto the outside surface of the substrate while the chocolate coating is in a liquid state. Accordingly, the present invention further includes a device for applying a thin layer of chocolate to a frozen confectionary substrate. The device includes a plurality of nozzles directed toward a target area, and a conveying member configured to move the frozen confectionary substrate into and out of the target area. The device further includes a reservoir configured to retain a supply of chocolate, a supply line arranged between the reservoir and the plurality of nozzles for carrying a volume of the chocolate from the reservoir to the nozzles. The supply line includes a pump therein to cause the chocolate to flow from the reservoir to the nozzles and to be expelled therefrom into the target area. The chocolate has a viscosity of between 250 and 650 cPs. The device also includes a heater configured to provide heat to the chocolate within the reservoir such that the chocolate is at a predetermined initial temperature when leaving the reservoir.

Preferably, the device further includes a heat exchanger configured to heat the chocolate to a predetermined spraying temperature prior to the chocolate being expelled from the nozzle into the target area. Preferably, the initial temperature is between 95°F and 140°F, and the spraying temperature is between 95°F and 140°F. In a preferred embodiment, the supply line is configured to operate under a substantially constant pressure. In such an embodiment, the nozzles are preferably equipped with valves to alternately change the valves from an open state to a closed state. When in the open state, the chocolate is projected out of the nozzles, and when in the closed state, the chocolate is prevented from projecting out of the nozzles. Further, it is preferred that the nozzles include a return outlet to allow a portion of the chocolate to return to the reservoir such that the supply line is maintained at a substantially constant pressure. Preferably the pressure is between 500 and 1500 psi. Further preferably, a constant flow-rate of chocolate is maintained within the supply line.

In one embodiment, the device is configured such that the movement of the substances into and out of the target area is carried out in a single direction substantially parallel to a lateral axis of the frozen confectionary substrate, and wherein the conveyor is arranged to move successive frozen confectionary substrates into and out of the target area. Alternatively, the device can be configured such that the movement into and out of the target area is carried out in a single direction substantially parallel to a long axis of the frozen confectionary substrate, and wherein the conveyor is adapted to hold a plurality of substrates and to simultaneously move the plurality of frozen confectionary substrates into and out of the target area.

A method for coating a frozen confectionary substrate with a layer of reduced fat chocolate is also provided. The method includes the steps of spraying a liquid chocolate composition into a target area, wherein the liquid chocolate composition includes less than 40% fat and moving a frozen confectionary substrate having an outside surface into and out of the target area such that substantially all of the outside surface becomes coated with the liquid chocolate composition. Preferably, the method further includes allowing the liquid chocolate composition to cool, thereby forming a solid chocolate coating having a thickness of about 1.7 mm, or less, on the frozen confectionary substrate. Preferably the step of allowing the liquid chocolate composition to cool takes less than about 60 seconds.

In an embodiment, the step of moving the frozen confectionary substrate into and out of the target area is repeated successively with a plurality of frozen confectionary substrates so as to coat each of the plurality of frozen confectionary substrates with the liquid chocolate composition. Alternatively, the step of moving the frozen confectionary substrate into and out of the target area includes moving a plurality of frozen confectionary substrates into and out of the target area simultaneously.

The invention also relates to a frozen confectionery product, comprising a substrate formed substantially of a frozen confection having an outside surface; and a discontinuous or continuous chocolate coating applied on the outside surface of the substrate, wherein the chocolate coating has a thickness of from about 0.3 mm to less than 1.7 mm with a thickness uniformity within about 20%. Preferably, the outside surface includes a face, and wherein a portion of the chocolate coating is applied on the face and has a thickness of from about 0.5 mm to 1.25 mm with a uniformity of within about 10%. Advantageously, the weight of the chocolate coating is at least 10% but less than or equal to about 40% of the weight of the ice cream substrate, and the chocolate coating contains about 40% or less fat by weight of the coating.

### BRIEF DESCRIPTION OF THE DRAWINGS

The above features and other advantages of the invention will become better understood by reference to the following detailed description of preferred embodiments and the accompanying drawings wherein:
Fig. 1 is a perspective, partial cut-away view of a frozen confectionary product according to an embodiment of the present invention;
Fig. 2 is a top view of a device that can be used to apply a coating to a frozen confectionary substrate to form the product shown in Fig. 1;
Fig. 3 is a side view of a conveyor used in the device of Fig. 2;
Fig. 4 is a front view of the device of Fig. 3;
Fig. 5 is a top view of an alternative embodiment of a device that can be used to apply a coating to a frozen confectionary substrate to form the product shown in Fig. 1;
Fig. 6 is a front view thereof;
Fig. 7 is a perspective view of an alternative embodiment of a frozen confectionary product of the present invention;
Fig. 8 is a top view of a device that can be used to apply a coating to a frozen confectionary substrate to form the product shown in Fig. 7;
Fig. 9 is a front view thereof; and
Fig. 10 is a schematic diagram of the further aspects of the device of Fig. 2.

### DETAILED DESCRIPTION OF THE INVENTION

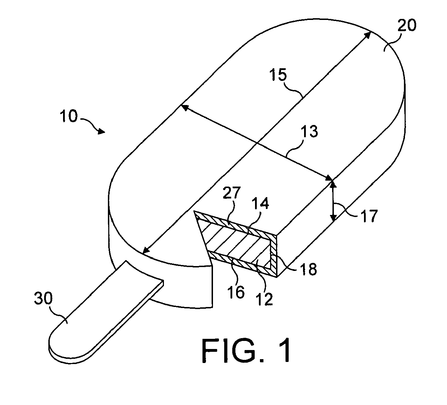

Referring to the figures, where like reference numerals indicate similar elements, a frozen confectionary bar 10 is shown in Fig. 1. Bar 10 includes an inner layer in the form of a substrate 12 made substantially of a frozen confectionary substance. The frozen confectionary substance can be any suitable frozen confection, for example, ice cream, frozen yogurt, sherbet, ice milk, gelato or the like. The frozen confection can have a reduced fat content, such as low- or reduced-fat ice cream, frozen yogurt or other similar low-fat or non-fat confection. Bar 10 further includes an outer coating 20 of reduced-fat chocolate. An embodiment of bar 10 preferably includes a stick 30 projecting therefrom that can be used to hold bar 10 by the consumer as well as during manufacture.

Substrate 12 can be in the shape of similar, know frozen confectionary bars and includes a front face 14, a rear face 16, and an outer edge 18. Substrate 12 can be in the shape of a rectangular prism or can be generally rounded or tapered as shown, but can have any other desired and suitable shape, such as substantially spherical or other bite-sized configurations, in other embodiments. Further, substrate 12 preferably has a maximum width 13 of between 2.5 and 10.2 cm, a height 15 of between 5 and 12.7 cm and a thickness 17 of between 1.3 and 3.8 cm. More preferably, substrate 12 has a maximum width 13 of about 6.4 cm, a maximum height of about 12.7 cm, and a thickness of about 2.5 cm. Further, substrate 12 preferably has a volume of between about 7.6 and 20.3 cm³, and more preferably of about 12.7 cm³. An embodiment of substrate has a surface area of between about 25.4 cm² and 63.5 cm² more preferably about 43.2 cm².

Coating 20 is formed of a reduced-fat chocolate composition having a fat content of at most about 45% by weight of the coating composition. In preferred embodiments, coating 20 has a fat content of between about 30% and 40% fat, preferably about 35% to 38%, and more preferably about 38% fat by total weight of the chocolate composition. The reduced-fat chocolate composition contains cocoa fat, cocoa liquor, which typically has about 55% fat content, and/or cocoa powder. The composition can contain other fats or oils (e.g., vegetable oil, coconut oil) in addition to or as an alternative to cocoa fat or cocoa liquor. Additionally, the composition can include milk, milk powder or whey powder, sugar, vanillin and one or more emulsifiers (e.g., lecithin, PGPR).

An embodiment of coating 20 is made according to a formulation shown in Table 1, wherein each ingredient is used in an amount within the range listed such that the total percentage of all ingredients used equals 100%, with the total percentage of fat being less than about 45% and, more preferably, about 38%. Another embodiment of coating 20 is made according to the formulation shown in Table 2, wherein each ingredient is used in an amount within the range listed such that the total percentage of all ingredients used equals 100%, with the total percentage of fat being less than about 45% and, more preferably, about 35%. Other suitable reduced- or low-fat chocolate compositions can be used to form coating 20 in other embodiments.

**Table 1**

| **Ingredient** | **Percent by Weight of Composition** |
|---|---|
| Cocoa fat | 10-35 |
| Coconut oil | 0-15 |
| Milk fat | 0-10 |
| Cocoa liquor | 10-50 |
| Sugar | 10-50 |
| Whole or skimmed milk powder | 0-25 |
| Emulsifiers | 0.1-1.0 |

**Table 2**

| **Ingredient** | **Percent by Weight of Composition** |
|---|---|
| Cocoa fat | 0-10 |
| Vegetable oil | 20-50 |
| Milk fat | 0-5 |
| Cocoa liquor / Cocoa powder | 0-20 |
| Sugar | 15-50 |
| Whole or skimmed milk powder | 0-15 |
| Emulsifiers | 0-1.0 |

The thickness 27 of coating 20 can vary, depending on the location of the coating 12 on bar 10, but the portion of coating 20 on both front face 14 and back face 16 is less than or equal to about 1.7 mm. Further, the portion of coating 20 formed on both the front face 14 and the back face 16 is preferably substantially uniform such that any variations in the thickness thereof are within about 10% of the average thickness of the portion of the coating. In a preferred embodiment the uniformity of the thickness of the coating 20 in the front 14 and back 16 faces is within about 5%. The coating 20 that is located on the edge 18 of substrate 12 or in the corner portions between the edge 18 and the faces 14,16 can be greater than that of coating 20 on either front face 14 or back face 16, but preferably does not exceed about 2.5 mm and is more preferably about 2 mm or less. In an embodiment, coating 20 is substantially uniform such that any variations in the thickness thereof do not exceed about 20% of the average thickness of coating 20. In a preferred embodiment, any variations in the thickness of coating 20 do not exceed about 15% and more preferably about 10% of the average thickness of coating 20. In an embodiment of bar 10, the weight of coating 20 is defined as the pickup weight. An embodiment of bar 10 has a coating 20 with a pickup weight of between about 0.05 and 0.22 g/cm² of surface area, and more preferably about 0.17 g/cm² of surface area. In an example, bar 10 with the aforementioned surface area of between 25.4 and 63.5 cm² preferably has a roughly corresponding pickup weight of between about 5 and 20 g. Preferably, bar 10 has a coating 20 wherein the pickup weight is between about 10% and 40% of the total weight of bar 10 and more preferably about 15% to 25% of the total weight of bar 10.

In preferred embodiments, coating 20 is formed on substrate 12 of bar 10 by applying melted, liquid chocolate composition through a spraying process. The use of a spraying process can allow a higher viscosity chocolate coating, such as the reduced-fat coating to be applied in a thinner layer than previously-known dipping processes. As stated previously, chocolate compositions increase in viscosity as the fat content is reduced. In turn, increased viscosity increases the pickup weight of chocolate coatings when applied by conventional processes, such as dipping. The viscosity of such composition was measured using standard methods and equipment, such as Brookfield viscometer, at the composition temperature of 40°C and was determined to be between about 250 and 650 cPs for the corresponding preferred fat range, and about 420.5 cPs for a composition having about 38% fat. A regular chocolate composition having at least about 48% fat by weight of the composition has a viscosity of about 26.6 cPs. As further discussed above, the increase in viscosity leads to an increased pickup weight of a coating applied using conventional methods, such as dipping, the additional amount of the coating adds overall fat to the bar to the extent that the per-weight reduction in fat can be outweighed. By using spraying, the thickness of the coating can remain the same, or can even be decreased, while reducing the fat percentage of the composition, thereby leading to an overall reduction in the fat content of the bar. Table 3, below, shows a comparison of characteristics of exemplary coatings applied to an ice cream substrate, wherein the coatings have the same composition, but are applied using spraying in one example and dipping in the other.

**Table 3**

| Method | Spraying | Dipping |
|---|---|---|
| Percent fat of chocolate composition | 35% | 35% |
| Pickup weight (g) | 15.5 | 25.5 |
| Drip time (s) | 10 | 20 |
| Cooling time for faces (s) | 12 | 68 |
| Total cooling time | 60 | 127 |
| Coating thickness (mm) | 1.5 | 2.0 |

As shown in Table 3, the use of spraying to apply a reduced-fat chocolate coating to an ice cream substrate reduces the pickup weight of the coating, which leads to an overall reduction in the fat content of the bar. Table 2 further shows that the application of the coating using spraying leads to a reduced drip time, and reduced cooling time, which can reduce production time and cost. Additionally, in conventional dipping applications, the frozen confectionary substrate is completely immersed in melted chocolate, which can be heated to a temperature of, for example, about 110°F. Exposure to high temperatures to this extent can cause undesired melting of the frozen confectionary, which can adversely affect the texture of the frozen confectionary when refrozen, leading to an inferior product. The use of spraying for the application of liquid chocolate reduces the exposure to high temperature and reduces unwanted melting of the frozen confectionary.

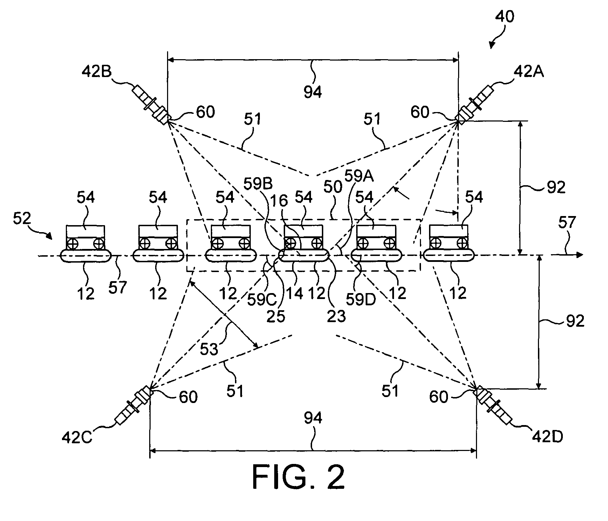

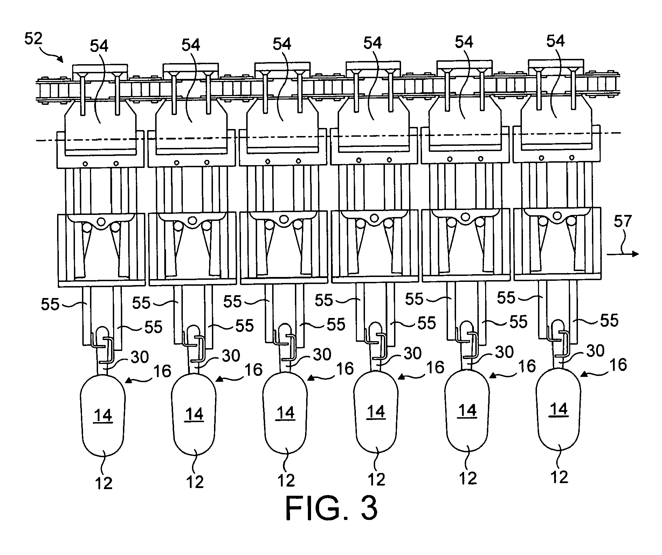

In a preferred embodiment, bar 10 has a coating 20 applied to a frozen confectionary substrate 12 by spraying using the device of Figs. 2-4. As shown in Fig. 2, device 40 includes a plurality of guns, and preferably at least four guns 42A,42B,42C,42D disposed generally towards a target area 50 at varying angles. Device 40 further includes a conveyor 52 for moving a plurality of frozen confectionary substrates 12 carried on respective sticks 30 through target area 50 in succession. Preferably, conveyor 52 is able to move at a rate of between about 10 and 12 m/s. In such a configuration, referred to as pass-through, conveyor 52 includes a plurality of individual units 54, each with a mechanism that, preferably using arms 55, grasps the sticks 30 projecting from the respective substrates 12 so as to hold each substrate 12 with the respective front 14 and back 16 faces oriented perpendicular to the direction of travel 57. Target area 50 is preferably sized such that substrates are substantially coated on all sides by passing through target area 52 in the horizontal direction. This further requires appropriate sizing of the spray pattern of each nozzle 60 which is affixed on the output end of each respective gun, as well as appropriate spacing of each gun from the target area.

In general, device 40 should have as many guns as necessary to apply coating 20 substantially evenly to front 14 and back 16 faces of substrate 12 as well as edge 18, which includes top 19, bottom 21, and first and second sides 23,25. In an embodiment, device 40 includes at least three guns. In an example, device 40 can include about 4 to 25 guns. In the preferred embodiment shown in Figs. 2-4, device 40 includes five guns 42A,42B,42C,42D,42E.

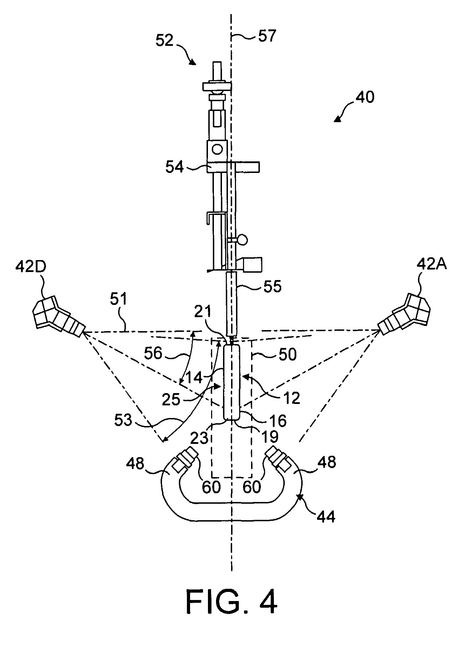

As shown in Fig. 2, four guns 42A,42B,42C,42D are preferably directed substantially horizontally toward target area 50 and are spaced therearound. Preferably, guns 42A,42B,42C,42D are directed toward target area 50 so that each gun 42A,42B,42C,42D sprays chocolate on one of front face 14 and back face 16 and one of first side 23 and second side 25, and such that each of first side 23 and second side 25 and front face 14 and back face 16 has chocolate sprayed on it by two of guns 42A,42B,42C,42D. As shown in Fig. 4, gun 42A is directed such that it sprays chocolate on first face 23 and front face 14, gun 42B is directed to spray chocolate on front side 14 and second face 25, gun 42C is directed toward second side 25 and back face 16, and gun 42D is directed toward back face 16 and first side 23. This arrangement can be achieved based on the orientation of the guns relative to the centerline of the substrates 12 as they travel through the target area 50. Guns 42A,42B,42C,42D are each spaced at a respective angle 59A,59B,59C,59D relative to center plane 57. In an embodiment all angles 59A,59B,59C,59D are substantially equal, but the angles can differ in other embodiments. Preferably, angles 59A,59B,59C,59D are between about 30° and 45° relative to the center plane 57.

As further shown in Fig. 2, each gun 42A,42B,42C,42D has a spray pattern 51 having a width 53. In one embodiment width 53 is preferably between 12.7 cm and 63.5 cm. More preferably, width 53 is between 20.3 cm and 53.3 cm. Each gun 42 is preferably a high-pressure gun and includes a nozzle 60 affixed to the output end thereof. Nozzle 60 preferably has an orifice diameter of between about 0.025 cm and 0.13 cm, and more preferably between about 0.05 and 0.10 cm. Nozzle 60 further has a pattern width of between about 12.7 cm and 101.6 cm and more preferably between about 20.3 cm and 53.3 cm. In an embodiment, guns 42A,42B,42C,42D are spaced from central plane 59 at a distance 92 that is preferably between 12.7 and 50.8 cm. Further each set of guns 42A,42B and guns 42C,42D are preferably spaced apart from one another at a distance 94 that is between 12.7 and 38.1 cm.

As shown in Fig. 4, Guns 42A,42B,42C,42D can further be angled downwardly so as to direct some of the chocolate sprayed therefrom toward bottom 21. Preferably, the downward angle 56 of guns 42A,42B,42C,42D is between about 10° and 30° from horizontal. A lower gun assembly 44 can be included to spray top 19 of substrate 12. Lower gun assembly can include a plurality of branches 46,48 each having a respective nozzle 60 at the end thereof Lower gun assembly 44 is configured to spray chocolate generally upward toward substrate 12 and can be done at a lower pressure of flowrate than guns 42A,42B,42C,42D.

An embodiment of a spraying device similar to that shown in Figs. 2-4 can be used to spray a coating onto a substrate that does not have a stick. Such substrates can be generally spherical, pyramidal, or rectangular in shape, although other shapes are possible. The substrates can have any desired and suitable size, and can be substantially small enough to be bite-sized, i.e., between 1 and 25g and preferably between 2 and 15g. In such embodiment, the substrates can be carried on a conveyor in the form of a standard conveyor belt or the like that is configured to carry the substrates through the target area. In an embodiment, the bottom of the substrates can be covered by the conveyor such that a lower gun assembly cannot be used to spray the coating onto the bottom of the substrate. In such an embodiment, the coating can be applied to the bottom of the substrate using conventional "bottoming" techniques, which can include passing the substrate through a shallow melted chocolate bath using a mesh conveyor. This technique can result in the bottom of the coating being somewhat thicker than the remainder of the coating. The portions of the coating that are applied by spraying, however, can have a substantially uniform coating having a thickness of less than about 1.7 mm. Further, the total weight of the coating can be within about 30 to 45% of the total weight of the confectionary.

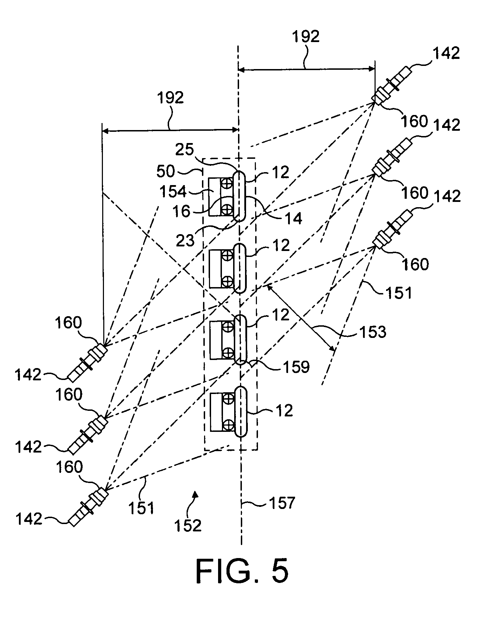

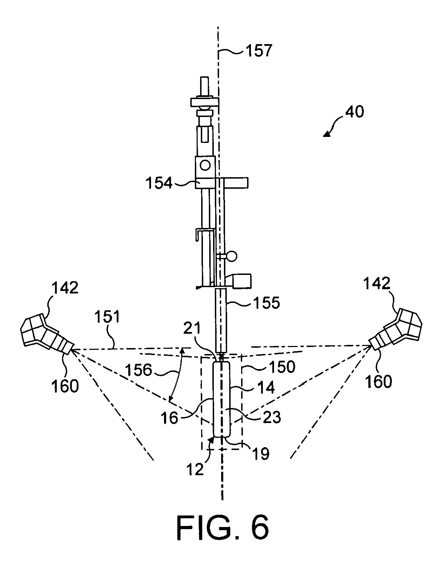

An alternative spraying device 140 is shown in Figs. 5 and 6. In this embodiment, conveyor 152 is designed to hold a predetermined number of substrates 12 by sticks 30 projecting therefrom and to move the substrates 12 downward from above target area 150 and into target area 150. Conveyor then reverses direction and moves substrates 12 upwardly out of target area 152. This movement into and out of target area results in the substrates 12 having coating 20 formed thereon and is achieved by the configuration of a plurality of guns 142 positioned within device 140. In the embodiment shown, six guns 42 are used to apply coating 20 to four substrates 12. In another embodiment, eight guns can be used to apply coating 20 to six substrates and so on.

Conveyor 152 is configured to move substrates 12 along a central plane 157 of target area 150. Guns 142 are preferably spaced apart from the central plane 157 at a distance 164 of about 5 in to 15 in and more preferably between about 7 in and 12 in. Further, guns 142 are spaced apart from one another at a distance 166 that is between about 7.6 cm and 57.2 cm and more preferably between about 63.5 cm and 30.5 cm. Each gun 142 is preferably a high-pressure gun and includes a nozzle 160 affixed to the output end thereof. Nozzle 160 preferably has an orifice diameter of between about 0.03 cm and 1.13 cm, and more preferably between about 0.05 and 0.10 cm. Nozzle 160 further has a pattern width of between about 25.4 cm and 101.6 cm and more preferably between about 38.1 cm and 76.2 cm. Each gun is oriented relative to central plane 157 at an angle 159 that is preferably between about 60° and 120° and is more preferably between about 80° and 110°. Further, as shown in Fig. 6, guns 142 are preferably inclined downwardly at an angle 156 relative to horizontal. Angle 156 is preferably between about 0° and 45° and is more preferably between about 10° and 30°.

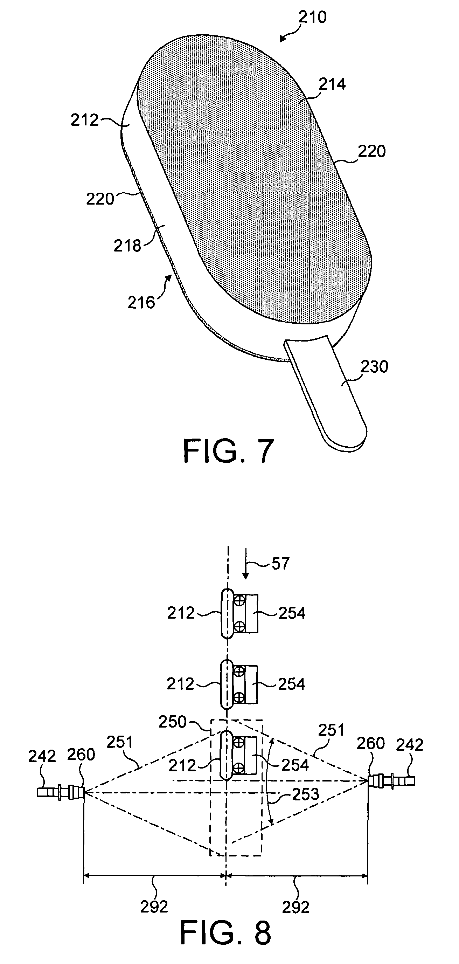

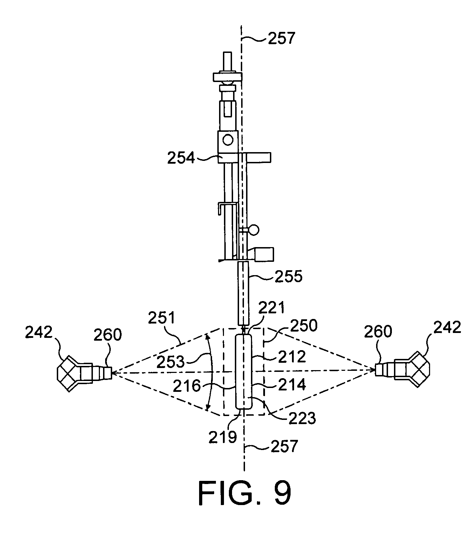

A further embodiment of a device 240 is shown in Figs. 8 and 9. Device 240 is used to make an "ice-cream sandwich" style frozen confectionary bar 210 as shown in Fig. 7. In this embodiment of bar 210, substrate 212 only has coating 220 applied to front face 214 and back face 216. In order to make bar 210, device 240 is configured in a similar manner to device 40, but only having two guns 242A,242B, with one gun 242A aimed directly at front face 214 and the other gun 242B aimed directly at back face 216. Each gun 242A,242B is angled at about 90° relative to centerline 262 and is aimed substantially horizontally. Preferably, guns 242A,242B are not aimed directly at each other.

Device 240 can also be used to apply a second coating on top of coating 20. Preferably, the second coating forms a design, such as stripes, patterns. characters, figures, or the like on the frozen confection. An embodiment of a secondary coating applied to form a design can be applied by placing a stencil between nozzle 260 and target area 250 in the desired shape. Further, the conveyor 252 can be configured to stop in the target area while the spray from the nozzle is turned on and then off to apply the desired thickness of the coating, which can be less than 1.7 mm and more preferably less than about 0.5 mm. An embodiment of device 240 that is configured to apply, for example, horizontal stripes can be further configured to apply the secondary coating while the conveyor 252 is moving. The secondary coating is preferably of a different color than coating 20, which can be achieved by using dyes in the composition or by using a different chocolate or non-chocolate formulation, such as dark chocolate, white chocolate, frosting or the like.

Alternatively, device 240 can also be used to apply a discontinuous coating directly on the substrate in order to form a design such as stripes, pattern, characters, figures and the like on said substrate. This can be achieved by placing a stencil between nozzle 260 and the target area, in order to block out the spray in a prescribed area thus allowing the pattern design to be formed by the substrate showing through.

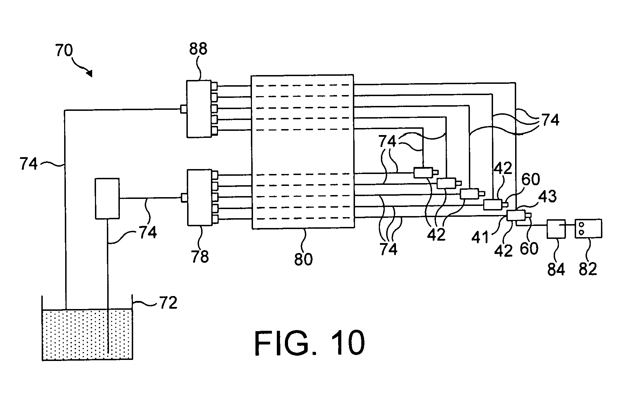

A supply system 70 used in device 40 is shown schematically in Fig. 10. Supply system 70 includes a supply chamber 72 for retaining a supply of the reduced-fat chocolate composition used to form coating 20. Preferably supply chamber 72 is in the form of a low-shear mixing tank and includes a heating element that retains the chocolate composition at a temperature of between 46°C and 50°C, and is capable of mixing the composition to retain the composition at a specific gravity of between about 1 and 2 and more preferably about 1.1 and a viscosity of between about 500 and 1200 cPs.

Supply chamber 72 is preferably connected via tubing 74 to pump 75. Tubing 74 is preferably between 0.95 cm and 1.91 cm in diameter. Tubing 74 is further preferably made from an abrasion-resistant material such as polytetrafluoroethylene (e.g., Teflon® manufactured by DuPont) or a similar material and further preferably includes steel braiding on the outside thereof Pump 76 is preferably a Tetra Alex™ 20 Pump manufactured by Tetra Pak, Inc., Pully, Switzerland, although other suitable pumps are available. Preferably, pump 76 is configured to maintain the pressure of the reduced-fat chocolate composition within the system 70 at a pressure of between about 500 psi and 1500 psi, and more preferably between about 800 psi and 1200 psi.

Pump 76 is preferably connected via tubing 74 to a manifold 78 that includes an inlet 77 and at least one outlet 79. Preferably manifold 78 has a number of outlets 79 corresponding to the number of guns 42,44 used in device 40. Accordingly a number of segments of tubing 74 corresponding to the number of guns 42,44 can be affixed to the manifold outlets 79 and can connect manifold 78 to the guns 42,44. Preferably, the segments of tubing 74 between manifold 78 and guns 42,44 pass through a heat exchanger 80 that is configured to maintain the reduced-fat chocolate composition at an appropriate temperature prior to entering guns 42. Preferably, the temperature of the chocolate composition exiting heat exchanger 80 is substantially the same as the temperature of the composition when in the mixing tank, that is, preferably between about 46 °C and 50 °C.

After exiting heat exchanger 80 supply system 70 directs the flow of the reduced-fat chocolate composition to guns 42,44. Guns 42,44 are preferably high pressure guns that are capable of handling a high-viscosity liquid such as the reduced-fat melted chocolate composition of the present invention. Such high-pressure guns are available, for example, from SSCO Spraying Systems AG, located at Pfäffikon, Switzerland, and Nordson Corporation, located at Westlake, Ohio. Preferably, guns 42,44 are configured to have an open state and a closed state. Each gun 42,44 has associated therewith a valve that controls the state of the gun 42,44. Further, each gun 42,44 has a fluid inlet 41, a fluid outlet, 43 and a nozzle 60.

The valve associated with each gun is preferably configured such that in the open state, gun 42,44 is open to the nozzle 60, thereby allowing the reduced-fat chocolate composition to be jetted out of nozzle 60 under pressure from pump 76. In the closed state the valve is such that the reduced-fat chocolate composition cannot flow out of nozzle 60. In both cases at least some of the reduced-fat chocolate composition flows out of fluid outlet 43. When the valve is in the closed state, substantially all of the reduced-fat chocolate composition flows through fluid outlet 43. When the valve is open, any excess reduced-fat chocolate composition that is not jetted from outlet 60 flows through fluid outlet 43. Fluid outlet 43 is preferably connected via tubing 74 to supply chamber 72 such that any of the reduced-fat chocolate composition that is not jetted can return thereto, preferably after passing through heat exchanger 80 and through an input manifold 88. This arrangement allows for the system to operate under substantially constant pressure and to maintain a substantially constant flow rate of the reduced-fat chocolate composition. The state of the valves is preferably computer-controlled. In the embodiment shown in Fig. 11, the opening and closing of the valves is actuated by an air supply 84, the action of which is controlled by a control panel 82.

Although the present spraying device and process are illustrated with reference to a reduced-fat chocolate coating composition, it will be appreciated that the device and process can be used with any suitable high-viscosity coating composition, including non-chocolate coating compositions having a viscosity of between 200 and 1000 cPs, e.g., peanut butter and yogurt compositions. Also, although a frozen confectionary bar is illustrated as an example, it will be appreciated that the high-viscosity coating composition according to the invention can be applied on any desired and suitable confectionary products, including other frozen and non-frozen confections.

While illustrative embodiments of the invention are disclosed herein, it will be appreciated that numerous modifications and other embodiments can be devised by those skilled in the art. For example, the features for the various embodiments can be used in other embodiments. Therefore, it will be understood that the appended claims are intended to cover all such modifications and embodiments that come within the spirit and scope of the present invention.

### EXAMPLES

### Example 1

A frozen confectionery according to the invention was coated with the following composition:

| Ingredients | % by weight in the composition |
|---|---|
| Sugar | 43.500 |
| Cocoa solids | 21.000 |
| cocoa butter | 29.700 |
| coconut oil | 4.900 |
| lecithin+PGPR | 0.900 |
| total | 100.000 |

### Example 2

A frozen confectionery according to the invention was coated with the following composition:

| Ingredients | % by weight in the composition |
|---|---|
| Sugar | 36.082 |
| Cocoa solids | 16.997 |
| cocoa butter | 0.000 |
| Cocoa liquor | 0.527 |
| coconut oil | 33.210 |
| Whey / milk solids | 12.355 |
| lecithin+PGPR | 0.769 |
| vanillin | 0.060 |
| total | 100.000 |

## Claims

1. A device for applying a continuous or discontinuous thin layer of chocolate to a frozen confectionery substrate, comprising:
a plurality of nozzles directed toward a target area;
a conveying member configured to move the frozen confectionery substrate into and out of the target area;
a reservoir configured to retain a supply of chocolate;
a supply line arranged between the reservoir and the plurality of nozzles for carrying a volume of the chocolate from the reservoir to the nozzles, the supply line including a pump therein to cause the chocolate to flow from the reservoir to the nozzles and to be expelled therefrom into the target area; and
a heater configured to provide heat to the chocolate within the reservoir such that the chocolate is at a predetermined initial temperature when leaving the reservoir.

2. A device according to claim 1 **characterized in that** it further comprises a heat exchanger configured to heat the chocolate to a predetermined spraying temperature prior to the chocolate being expelled from the nozzle into the target area.

3. A device according to claim 2 **characterized in that** the initial temperature is between 95°F and 140°F, and wherein the spraying temperature is between 95°F and 140°F.

4. A device according to claim 1 **characterized in that** the supply line is configured to operate under a substantially constant pressure between 500 and 1500 psi.

5. A device according to claim 4, **characterized in that** the nozzles include valves configured to alternately change the valves from an open state to a closed state, wherein in the open state the chocolate is projected out of the nozzles, and wherein in the closed state the chocolate is prevented from projecting out of the nozzles.

6. A device according to claim 5, wherein the nozzles include respective return outlets to allow a portion of the chocolate to return to the reservoir such that the supply line is maintained at a substantially constant pressure.

7. A device according to claim 1, wherein the movement into and out of the target area is carried out in a single direction substantially parallel to a long axis of the frozen confectionery substrate, and wherein the conveyor is adapted to hold a plurality of substrates and to simultaneously move the plurality of frozen confectionery substrates into and out of the target area.

8. A device according to claim 7, wherein the target area has a first side and a second side, and wherein the plurality of nozzles includes a first nozzle, a second nozzle, and a third nozzle, each of the first, second, and third nozzles being directed toward, at least in part, different lateral portions of the first side of the target area, and wherein the plurality of nozzles further includes a fourth nozzle, a fifth nozzle, and a sixth nozzle, each of the first, second, and third nozzles being directed toward, at least in part, different lateral portions of the second side of the target area.

9. A device according to claim 1, wherein at least a first nozzle and a second nozzle are disposed on a first side of the target area, and wherein the first nozzle and second nozzle are spaced apart from each other at a distance of between 12.7 and 38.1 cm.

10. A device according to claim 1 further including at least on stencil positioned between at least one of the nozzle and the target area.

11. A method for coating a frozen confectionery substrate with a continuous or discontinuous layer of reduced fat chocolate comprising the steps of:
spraying a liquid chocolate composition into a target area, wherein the liquid chocolate composition includes less than 40% fat; and
moving a frozen confectionery substrate having an outside surface into and out of the target area such that a portion of the outside surface becomes coated with the liquid chocolate composition.

12. A method according to claim 11 further including allowing the liquid chocolate composition to cool, thereby forming a solid chocolate coating having a thickness of from about 0.3 mm to less than about 1.7 mm on the frozen confectionery substrate.

13. A method according to claim 12, wherein the liquid chocolate has a viscosity of between of up to 650 cPs and the step of allowing the liquid chocolate composition to cool takes less than about 60 seconds and the solid chocolate coating has a thickness of from about 0.5 mm to about 1.25 mm.

14. A method according to claim 11 further including the step of drawing the liquid chocolate composition from a reservoir and causing the liquid chocolate composition to flow through a supply line and through an nozzle, wherein the step of spraying the liquid chocolate composition into the target area is caused by the liquid chocolate composition flowing through the nozzle.

15. A product obtainable by a method according to any of claims 11 to 14.
